# EUROPEAN PATENT SPECIFICATION

(11) **EP 3 467 667 B1**
(45) Date of publication and mention of the grant of the patent: **22.06.2022**
(21) Application number: 17819274.6
(22) Date of filing: 28.06.2017
(51) Int. Cl.: G06F 13/20, G06F 21/82, G06F 21/74, G06F 13/40, G06F 15/78, G06Q 20/32

(54) **SYSTEM-ON-CHIP AND TERMINAL**
SYSTEM-AUF-CHIP UND ENDGERÄT
SYSTÈME SUR PUCE ET TERMINAL

(30) Priority: 01.07.2016 CN 201610512240
(43) Date of publication of application: 10.04.2019
(73) Proprietor: Huawei Technologies Co., Ltd., Longgang District Shenzhen, Guangdong 518129 (CN)
(72) Inventor: PAN, Shilin, Shenzhen Guangdong 518129 (CN)
(74) Representative: Maiwald Patent- und Rechtsanwaltsgesellschaft mbH
(86) International application number: PCT/CN2017/090591
(87) International publication number: WO 2018/001277

(56) References cited:
- CN-A- 104 471 586
- CN-A- 104 778 401
- CN-U- 201 917 963
- US-A1- 2011 016 310
- US-A1- 2014 013 406
- US-A1- 2014 075 496
- US-A1- 2014 244 513
- US-A1- 2015 007 335
- US-A1- 2015 186 879
- US-A1- 2015 199 509
- US-A1- 2016 078 223

## Description

### TECHNICAL FIELD

This application relates to the field of information technologies, and more specifically, to a system on chip (SOC) and a terminal.

### BACKGROUND

Mobile phone payment, also known as mobile payment (Mobile Payment), is a service mode that allows a mobile subscriber to pay for consumed goods or services by using a mobile terminal (typically a mobile phone) of the mobile subscriber. Currently, mobile payment is implemented by a mobile phone mainly in three manners, that is, implemented by using a secure digital (SD) card, by using a subscriber identity module (SIM) card, or by using an all-terminal solution of near field communication (NFC) and an embedded secure element (eSE). The eSE, also referred to as an external secure element, integrates a secure element (SE) chip into a mobile phone product board to implement an application service such as a financial service. In the all-terminal solution, a mobile phone performs contactless card swipe at a point of sale (POS) machine, and the NFC and the SE (on which a bank application and data has been preconfigured) cooperate to complete a payment transaction.

For example, US 2015/0199509 A1 describes a data processing device for executing an application. The data processing device comprises a processing unit for controlling access to at least one user interface comprised in the data processing device, and a secure element for facilitating secure execution of the application. The secure element is arranged to cause the processing unit to restrict the access to the user interface during execution of the application.

US 2014/0244513 A1 describes a method for protecting sensitive data that are utilized during NFC communications or transactions, and more particularly, a system on chip (SOC) microcontroller that is configured to control processing of the sensitive data during the NFC transactions. A NFC controller is configured as a router for the SOC for routing the sensitive data to the secure element.

US 2014/013406 A1 discloses a mobile phone processor connected to an NFC interface via a secure element.

US 2014/075496 A1 describes devices, methods and systems for securely providing context sensor data to mobile platform applications. The method may include configuring sensors to provide context data, the context data associated with a mobile device; providing an application programming interface (API) to a sensor driver, the sensor driver configured to control the sensors; providing a trusted execution environment (TEE) operating on the mobile device, the TEE configured to host the sensor driver and restrict control and data access to the sensor driver and to the sensors; generating a request for the context data through the API, the request generated by an application associated with the mobile device; receiving, by the application, the requested context data and a validity indicator through the API; verifying, by the application, the requested context data based on the validity indicator; and adjusting a policy associated with the application based on the verified context data.

US 2011/016310 A1 describes a secure system having a Trusted Platform Module coupled between a peripheral device and a host. In operation, the Trusted Platform Module is provided to control communication between the peripheral device and the host.

US 2015/007335 A1 describes an apparatus for processing a secure transaction. The apparatus comprises: a processor; a secure element coupled to the processor; and a connectivity device coupled to the secure element, and configured to exchange communications with a device that is external to the apparatus, and receive and execute one or more unsolicited commands from the secure element.

For an existing smartphone, a touchscreen is the only apparatus that allows a user to easily enter a password or other data. However, the data entered by the user on the touchscreen is not really secure. Theoretically, an input touch point and data on the screen may be intercepted by a malicious application, and consequently, security sensitive data such as a bank password of the user may be obtained.

For an existing SD card, SIM card, or eSE solution, an SOC chip and a touchscreen are directly connected by using an inter-integrated circuit (I2C) bus or another bus. Both touchscreen input data and display location data are first obtained by an application processor (AP) on the SOC, and a security level is relatively low.

### SUMMARY

The invention is defined by the appended claims. Embodiments and examples not covered by the claims are meant to illustrate, and facilitate the understanding of, the claimed invention.

Embodiments of this application provide a system on chip and a terminal, so as to improve input security.

According to a first aspect, a system on chip SOC is provided, including: a bus interface, a secure element SE, and a first element that are integrated in the SOC, where the bus interface is configured to be connected to an input/output I/O device; the SE is configured to: in a secure scenario, directly access the I/O device by using the bus interface, obtain first data input by the I/O device, instead of being forwarded by the first element, and perform secure processing on the first data, and in a common scenario, control access of the first element to the I/O device, where the secure scenario indicates a scenario that requires secure input, and a common scenario indicates a scenario that does not require secure input; and the first element is configured to: in the common scenario, under control of the SE, obtain second data input by the I/O device.

In the SOC in an embodiment of this application, the SE may directly access the bus interface. Therefore, in the secure scenario, input data is obtained directly by the SE, instead of being forwarded by the first element. This can improve input security. In some possible implementations, the SE is further configured to: in the secure scenario, control the I/O device to display a data input interface.

In some possible implementations, the SE is further configured to send, to a server, data obtained after secure processing.

For example, during secure payment, the SE displays a password input interface to a user by using the bus interface; the user enters a password in this interface; and the SE obtains, by using the bus interface, password data entered by the user, encrypts the password data by using a PIN key stored in the SE, and sends encrypted data to a financial industry verification server for verification. This can improve payment security.

In some possible implementations, the SE is further configured to determine, according to an application that is currently accessing the I/O device, whether a current application environment is the secure scenario or the common scenario.

In some possible implementations, the SE is configured to: in the common scenario, access the I/O device by using the bus interface, obtain the second data, and send the second data to the first element.

In some possible implementations, the bus interface is disposed in the SE.

In some possible implementations, the bus interface is controlled by system software running on the SE.

In some possible implementations, the SE is configured to configure, in the secure scenario, an access mode of the bus interface as accessible only by the SE, and configure, in the common scenario, the access mode of the bus interface as accessible by the first element.

In some possible implementations, the SE can configure the access mode of the bus interface, and the first element cannot configure the access mode of the bus interface.

The access mode of the bus interface includes accessible only by the SE and accessible by the first element.

In some possible implementations, the bus interface includes a first bus interface and a second bus interface, and the SE is configured to: in the secure scenario, control the second bus interface to be connected to the I/O device, and access the I/O device by using the second bus interface; and in a non-secure scenario, control the first bus interface to be connected to the I/O device, so that the first element accesses the I/O device by using the first bus interface.

In some possible implementations, the SOC further includes a multi-way switch, and the SE is configured to control switching of the multi-way switch in the secure scenario, so that the second bus interface is connected to the I/O device, and control switching of the multi-way switch in the common scenario, so that the first bus interface is connected to the I/O device.

In some possible implementations, the multi-way switch is disposed in the SE.

In some possible implementations, the second bus interface is disposed in the SE.

In some possible implementations, the SE is further configured to send a security indication to the user when determining to enter the secure scenario.

In some possible implementations, the SE may determine, according to a fact that an application currently requiring input is an application in the SE, that secure input is required, that is, determine to enter the secure scenario.

In some possible implementations, the SE is specifically configured to turn on a security indicator when determining to enter the secure scenario.

In some possible implementations, the I/O device includes a data collection sensor, a touchscreen, or a display.

In some possible implementations, the bus interface includes an inter-integrated circuit bus I2C interface or a mobile industry processor interface MIPI.

According to the first aspect, the first element includes an application processor, a processor core in a trusted execution environment TEE, a digital signal processor, or an application-specific integrated circuit.

The SOC in the embodiments of this application can achieve SE-level security.

A mobile phone or another mobile terminal open platform that uses the SOC in the embodiments of this application has a secure input capability of a POS machine. In other words, the mobile phone or another mobile terminal device may have a POS machine function.

According to a second aspect, a terminal is provided, where the terminal includes the SOC according to the first aspect or any possible implementation of the first aspect, and an I/O device.

### BRIEF DESCRIPTION OF DRAWINGS

To describe the technical solutions in the embodiments of this application more clearly, the following briefly introduces the accompanying drawings required for describing the embodiments of this application. Apparently, the accompanying drawings in the following description show merely some embodiments of this application, and a person of ordinary skill in the art may still derive other drawings from these accompanying drawings without creative efforts.
FIG. 1a is an application architecture diagram according to an embodiment of this application;
FIG. 1b is a schematic block diagram of an SOC according to an embodiment of this application;
FIG. 2 is a schematic block diagram of an SOC according to another embodiment of this application;
FIG. 3 is a schematic structural diagram of an SOC according to still another embodiment of this application;
FIG. 4 is a schematic structural diagram of an SOC according to still another embodiment of this application;
FIG. 5 is a schematic block diagram of an SOC according to still another embodiment of this application;
FIG. 6a is a schematic structural diagram of an SOC according to still another embodiment of this application;
FIG. 6b is a schematic structural diagram of an SOC according to still another embodiment of this application;
FIG. 7 is a schematic block diagram of a terminal according to an embodiment of this application; and
FIG. 8 is a schematic structural diagram of a terminal according to another embodiment of this application.

### DESCRIPTION OF EMBODIMENTS

The following clearly describes the technical solutions in embodiments of this application with reference to the accompanying drawings in the embodiments of this application. Apparently, the described embodiments are merely some but not all of the embodiments of this application. All other embodiments obtained by a person of ordinary skill in the art based on the embodiments of this application without creative efforts shall fall within the protection scope of this application.

An SOC chip in the embodiments of this application may be applied to a terminal (such as a mobile phone) that supports mobile payment, so as to improve input or output security of the terminal.

For easy understanding of the technical solutions in the embodiments of this application, the following first describes related terminology in the embodiments of this application.

In the prior art, a secure element (Secure Element, SE) is a tamper-resistant chip, and can ensure that data is stored in a secure place, and information is accessible only to authorized application programs and personnel. The secure element is similar to a personal identity of a user or a device. For example, during secure payment, a bank application and data are stored in the SE.

After various forms of iteration of mobile payment products, products such as a mobile phone and a wearable device gradually become mainstream application carriers for mobile payment, and present a greater advantage over conventional manners in terms of usability, security, portability, an interaction interface, and so on. Currently, financial functions of these products are all based on a core component: an embedded secure element (embedded Secure Element, eSE). The eSE, also referred to as an external SE, varies in size and also in design, and can be embedded in any type of mobile device. The eSE can manage and control a financial application in a mobile payment product conveniently and securely.

In the embodiments of this application, the SE is embedded in the SOC chip and is called an integrated secure element (integrated Secure Element, inSE). That is, an SE subsystem integrated in the SOC, instead of an embedded SE (eSE), is used. The inSE may also be represented as an in-SOC SE.

In the embodiments of this application, optionally, the SE may include at least one processor that is configured to execute various operations of the SE, such as data access, data processing, and control, to implement related functions of the SE in the embodiments of this application. Optionally, the SE may further include: a memory, configured to store data, an instruction, or the like; and a communications interface, configured to communicate with another component. It should be understood that the foregoing is just a specific implementation of the SE, and this application imposes no limitation thereto. That is, the SE may also use another possible implementation that can implement related functions of the SE in the embodiments of this application.

In the embodiments of this application, a first element is a processing element, other than the SE, in the chip. For example, the first element may be an application processor, a processor core running in a trusted execution environment (TEE), a digital signal processor (DSP), an application-specific integrated circuit (ASIC), or the like.

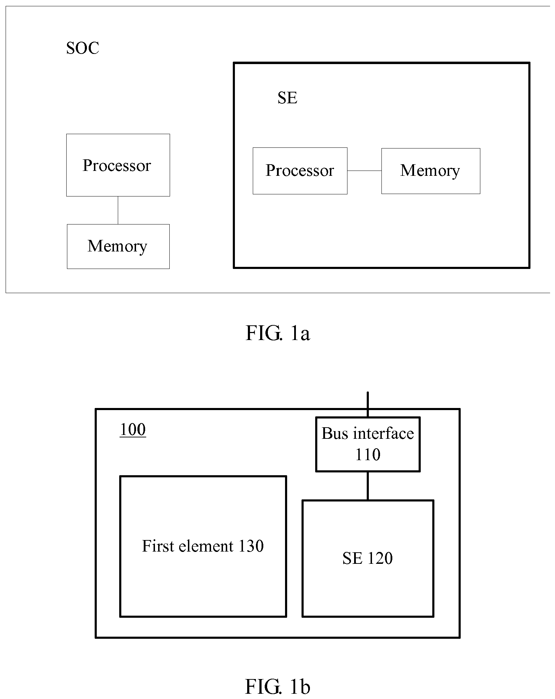

FIG. 1a is an application architecture diagram according to an embodiment of this application. As shown in FIG. 1a, in this embodiment of this application, an eSE is not used; instead, an SE is integrated in an SOC chip. A processing element, other than the SE, in the SOC chip is referred to as a first element. In FIG. 1a, a processor and a memory are used as examples of the SE and the first element. However, this is not limited in this application. In other words, the SE and the first element may include more or fewer components or modules, that is, a quantity and a type of the components or modules may be configured according to an actual requirement.

In the SOC chip with an integrated SE in this embodiment of this application, a bus interface for interconnecting with an input/output (I/O) device (such as a touch sensor) is disposed in the SE, or access to the bus interface is controlled by the SE, so that real SE-level security can be achieved.

FIG. 1b is a schematic block diagram of an SOC 100 according to an embodiment of this application. As shown in FIG. 1b, the SOC 100 includes a bus interface 110, an SE 120, and a first element 130 that are integrated in the SOC 100.

In this embodiment of this application, the SE 120 is integrated in the SOC 100. The SE 120 stores tamper-proof data. For example, during secure payment, a bank application and data, such as a personal identification number (Personal Identification Number, PIN) key, are stored in the SE.

The bus interface 110 is configured to be connected to an I/O device. The I/O device is an input/output device of a terminal. For example, the I/O device may be a data collection sensor, a touchscreen, or a display.

The data collection sensor is a sensor (sensor) with a data collection function, including a sensor that collects data in an interaction manner such as somatosensory, iris, and brain waves, for example, a touch sensor.

The touchscreen may include a touch sensor and a liquid crystal display (Liquid Crystal Display, LCD).

The display may include an LCD, an organic light-emitting diode (Organic Light-Emitting Diode, OLED) screen, an e-ink, a plasma display panel (Plasma Display Panel, PDP), and the like.

The bus interface 110 may be an I2C interface, a mobile industry processor interface (Mobile Industry Processor Interface, MIPI), or another bus interface that can be connected to the I/O device.

It should be understood that, the foregoing examples of the I/O device and the bus interface 110 are only intended to help a person skilled in the art better understand this embodiment of this application, rather than limiting the scope of this embodiment of this application. For ease of description, the following descriptions are based on an example in which the I/O device is a touch sensor and the bus interface 110 is an I2C interface.

The SE 120 is configured to: in a secure scenario, access the I/O device by using the bus interface 110, obtain first data input by the I/O device, and perform secure processing on the first data; and in a common scenario, control access of the first element 130 to the I/O device.

The secure scenario indicates a scenario that requires secure input, for example, a secure payment scenario that requires secure input and display, and the common scenario indicates a scenario that does not require secure input.

Optionally, the SE 120 may determine, according to an application currently accessing the I/O device, whether a current application environment is the secure scenario or the common scenario. For example, if an application that currently requires the I/O device to input data is an application in the SE 120, the SE 120 may determine that secure input is required, that is, the current application environment is the secure scenario; otherwise, the current application environment is the common scenario.

In this embodiment of this application, the SE 120 accesses the I/O device in the secure scenario by using the bus interface 110, that is, the SE 120 may directly access the bus interface 110 in the secure scenario, and then access the I/O device, and obtain the first data input by the I/O device. The first data is not forwarded by the first element 130, so that input security in the secure scenario can be improved.

Optionally, the SE 120 is further configured to control, in the secure scenario, the I/O device to display a data input interface.

Specifically, when secure input is required, for example, when the SE 120 determines, based on a fact that the application currently requiring input is an application in the SE 120, that secure input is required, the SE 120 accesses the I/O device by using the bus interface 110 and outputs a display interface to a user; the user inputs the first data according to the display interface; and the SE 120 obtains, by using the bus interface 110, the first data input by the user.

Optionally, the SE 120 is further configured to perform secure processing on the first data and send, to a verification server, data obtained after secure processing.

For example, during secure payment, the SE 120 displays a password input interface to a user by using the bus interface 110; the user enters a password in this interface; and the SE 120 obtains, by using the bus interface 110, password data entered by the user, encrypts the password data by using a PIN key stored in the SE 120, and sends encrypted data to a financial industry verification server for verification. This can improve payment security.

It should be understood that, in various embodiments of this application, operations such as data access, data processing, and control may be implemented by using a processor in the SE, and data transmission may be implemented by using a communications interface in the SE. However, this is not limited in this application.

The first element 130 is configured to: in the common scenario, under control of the SE 120, obtain second data input by the I/O device.

In the common scenario, that is, in a scenario that does not require secure input, the first element 130 may obtain, under the control of the SE 120, the second data input by the I/O device.

In this embodiment of this application, there may be various position and connection relationships between the SE 120 and the bus interface 110, and correspondingly, there may be a variety of control modes of the SE 120, which are described separately below.

Optionally, in an embodiment of this application, in the common scenario, the SE 120 accesses the I/O device by using the bus interface 110, obtains the second data, and sends the second data to the first element 130.

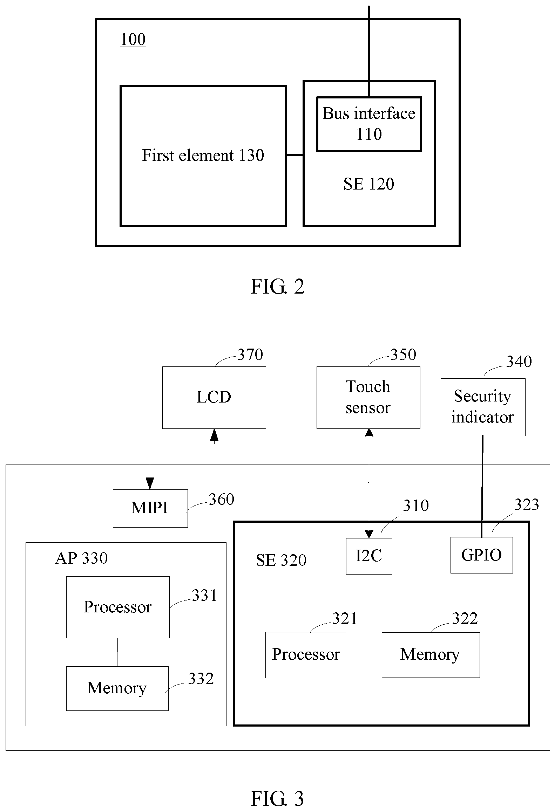

In this embodiment, the SE 120 may directly access the bus interface 110, but the first element 130 may not directly access the bus interface 110. For example, as shown in FIG. 2, the bus interface 110 is disposed in the SE 120. As the SE 120 is integrated in the SOC 100, performance and a response latency of the SE 120 may be relatively good. The bus interface 110 is directly disposed in the integrated SE 120 and controlled by the SE 120 (for example, system software running on the SE 120). In this case, for a common scenario, that is, a scenario that does not require secure input, access of the first element 130 to the bus interface 110 is forwarded by the SE 120. For a secure scenario, that is, a scenario that requires secure input, the SE 120 does not forward data any more, that is, only the SE 120 can obtain, by using the bus interface 110, data entered by a user, so that input security is improved.

Optionally, the SE 120 may further send a security indication to a user when determining to enter the secure scenario. For example, the SE 120 controls a security indicator and informs, by turning on the security indicator, the user of entering the secure scenario.

For example, the SE 120 determines, based on a fact that an application currently requiring input is an application in the SE 120, that secure input is required, that is, determines to enter the secure scenario.

FIG. 3 is an example of an SOC in this embodiment of this application. As shown in FIG. 3, an I2C interface 310 is disposed in an SE 320. The SE 320 is corresponding to the foregoing SE 120. Specifically, the SE 320 may include a processor 321 that is configured to execute various operations of the SE 320, a memory 322, a general-purpose input/output (GPIO) 323, and the like. The GPIO 323 is connected to a security indicator 340. It should be understood that, the SE 320 may further include another module, and a quantity and a type of modules in the SE 320 may be set according to an actual requirement. This is not limited in this application. An AP 330 is corresponding to the foregoing first element 130. Specifically, the AP 330 may include a processor 331, a memory 332, and the like. It should be understood that, the AP 330 may further include another module, and a quantity and a type of modules in the AP 330 may be set according to an actual requirement. This is not limited in this application.

The I2C interface 310 is connected to a touch sensor 350, and an MIPI 360 is connected to an LCD 370.

In a scenario that does not require secure input, a message and data of the touch sensor 350 are forwarded (for example, by using email communication) by a chip operating system (COS) of the SE 320 to a primary AP 330. When COS system software determines that secure input is required, the security indicator 340 (or another security indication that can notify the user; this application is not limited to the security indicator) is turned on and the message or the data of the touch sensor 350 are not forwarded to the primary AP 330 any more until user input is completed. The messages and the data of the touch sensor 350 can continue to be forwarded to the AP 330 after the user clicks OK and the security indicator 340 is turned off.

In FIG. 3, the I2C interface 310 is disposed in the SE 320, and the MIPI 360 is not in the SE 320. It should be understood that the MIPI 360 that is interconnected with the LCD 370 may alternatively be disposed in the SE 320. In other words, both the I2C interface 310 and the MIPI 360 may be disposed in the SE 320. This is not limited in this application.

Optionally, in another embodiment of this application, in the secure scenario, the SE 120 configures an access mode of the bus interface 110 as accessible only by the SE 120; and in the common scenario, the SE 120 configures the access mode of the bus interface 110 as accessible by the first element 130.

In this embodiment, the SE 120 may configure the access mode of the bus interface 110, whereas the first element 130 may not configure the access mode of the bus interface 110. In the secure scenario, the SE 120 configures the access mode of the bus interface 110 as accessible only by the SE 120. In this scenario, only the SE 120 can access the bus interface 110, and the first element 130 cannot access the bus interface 110. When exiting the secure scenario, the SE 120 configures the access mode of the bus interface 110 as accessible by the first element 130. In this scenario, the first element 130 can access the bus interface 110.

Optionally, the SE 120 may further send a security indication to a user when determining to enter the secure scenario. For example, the SE 120 controls a security indicator and informs, by turning on the security indicator, the user of entering the secure scenario.

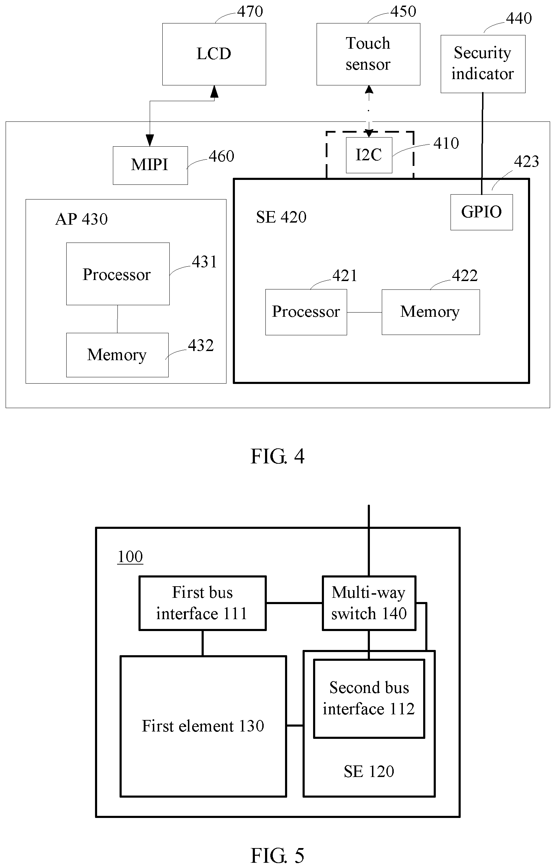

For example, FIG. 4 is another example of a chip according to an embodiment of this application. In FIG. 4, an SE 420 configures an access mode of an I2C interface 410. The SE 420 is corresponding to the foregoing SE 120. Specifically, the SE 420 may include a processor 421 that is configured to execute various operations of the SE 420, a memory 422, a GPIO 423, and the like. The GPIO 423 is connected to a security indicator 440. It should be understood that, the SE 420 may further include another module, and a quantity and a type of modules in the SE 420 may be set according to an actual requirement. This is not limited in this application. An AP 430 is corresponding to the foregoing first element 130. Specifically, the AP 430 may include a processor 431, a memory 432, and the like. It should be understood that, the AP 430 may further include another module, and a quantity and a type of modules in the AP 430 may be set according to an actual requirement. This is not limited in this application, either.

The I2C interface 410 is connected to a touch sensor 450, and an MIPI 460 is connected to an LCD 470.

In a secure scenario, the SE 420 configures the I2C interface 410 that is interconnected with the touch sensor 450 as accessible only by the SE (SE Access Only), that is, only the processor 421 of the SE 420 can access the I2C interface 410, and any other processor, such as the processor 431, cannot access the I2C interface 410. When exiting the secure scenario, only the SE 420 can make, by means of configuration, the I2C interface 410 exit the SE Access Only mode. After the I2C interface 410 exits the SE Access Only mode, a processor of the first element, for example, the processor 431, can access the I2C interface 410.

In FIG. 4, the SE 420 configures the access mode of the I2C interface 410, and the SE 420 does not configure an access mode of the MIPI 460. It should be understood that, the SE 420 may also configure the access mode of the MIPI 460. In other words, the access modes of both the I2C interface 410 and the MIPI 460 may be controlled by the SE 420. This is not limited in this application.

Optionally, in another embodiment of this application, as shown in FIG. 5, a bus interface 110 may include a first bus interface 111 and a second bus interface 112.

An SE 120 accesses the second bus interface 112. Optionally, the second bus interface 112 may be disposed in the SE 120.

A first element 130 accesses the first bus interface 111.

In this case, in a secure scenario, the SE 120 controls the second bus interface 112 to be connected to an I/O device, and accesses the I/O device by using the second bus interface 112; and in a common scenario, the SE 120 controls the first bus interface 111 to be connected to the I/O device, so that the first element 130 accesses the I/O device by using the first bus interface 111.

In this embodiment, a pin interconnected with the I/O device is internally reused, that is, the first bus interface 111 and the second bus interface 112 may be switched to be connected to the I/O device, and the switching is controlled by the SE 120. Specifically, in the secure scenario, the SE 120 controls the second bus interface 112 to be connected to the I/O device, so that the SE 120 accesses the I/O device by using the second bus interface 112. In the common scenario, the SE 120 controls the first bus interface 111 to be connected to the I/O device, so that the first element 130 accesses the I/O device by using the first bus interface 111.

Optionally, the switching may be implemented by using a multi-way switch 140. Specifically, in the secure scenario, the SE 120 controls switching of the multi-way switch 140, so that the second bus interface 112 is connected to the I/O device, and the SE 120 can access the I/O device by using the second bus interface 112. In the common scenario, the SE 120 controls switching of the multi-way switch 140, so that the first bus interface 111 is connected to the I/O device, and the first element 130 can access the I/O device by using the first bus interface 111.

Optionally, the multi-way switch 140 may be disposed in the SE 120.

Optionally, the SE 120 may further send a security indication to a user when determining to enter the secure scenario. For example, the SE 120 controls a security indicator and informs, by turning on the security indicator, the user of entering the secure scenario.

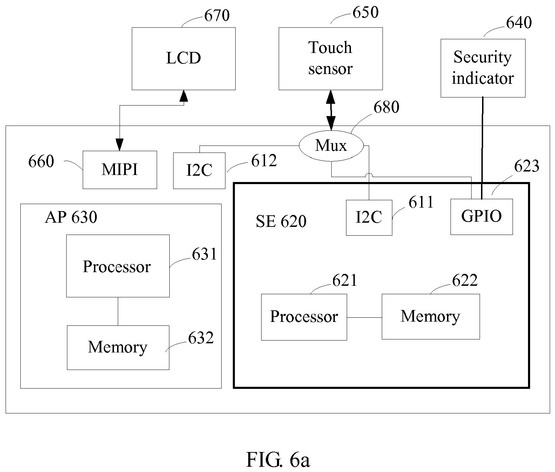

For example, FIG. 6a is another example of a chip in this embodiment of this application. In FIG. 6a, an SE 620 controls a multi-way switch 680 to switch between an I2C interface 611 and an I2C interface 612 to connect to a touch sensor 650. The SE 620 is corresponding to the foregoing SE 120. Specifically, the SE 620 may include a processor 621 that is configured to execute various operations of the SE 620, a memory 622, a GPIO 623, and the like. The GPIO 623 is connected to a security indicator 640. Optionally, the SE 620 may further control the multi-way switch 680 by using the GPIO 623. The SE 620 may also control the multi-way switch 680 by other means, for example, controlling the multi-way switch 680 by using configured register logic. It should be understood that, the SE 620 may further include another module, and a quantity and a type of modules in the SE 620 may be set according to an actual requirement. This is not limited in this application. An AP 630 is corresponding to the foregoing first element 130. Specifically, the AP 630 may include a processor 631, a memory 632, and the like. It should be understood that, the AP 630 may further include another module, and a quantity and a type of modules in the AP 630 may be set according to an actual requirement. This is not limited in this application.

An MIPI 660 is connected to an LCD 670.

In a scenario that does not require secure input, the SE 620 controls switching of the multi-way switch 680, so that the I2C interface 611 is connected to the touch sensor 650. Data entered by a user is directly sent to the I2C interface 611, so as to facilitate access by the AP 630. When COS system software determines that secure input is required, the security indicator 640 (or another security indication that can notify the user; this application is not limited to the security indicator) is turned on, and switching of the multi-way switch 680 is controlled, so that the I2C interface 612 is connected to the touch sensor 650. The I2C interface 611 can no longer obtain data from the touch sensor 650. Only after user input is completed, the user clicks OK, and the security indicator 640 is turned off, the SE 620 can control switching of the multi-way switch 680, so that the I2C interface 611 is connected to the touch sensor 650 to continue to work.

It should be understood that the MIPI 660 may also use dual-interface design, and the SE 620 controls switching. This is not limited in this application.

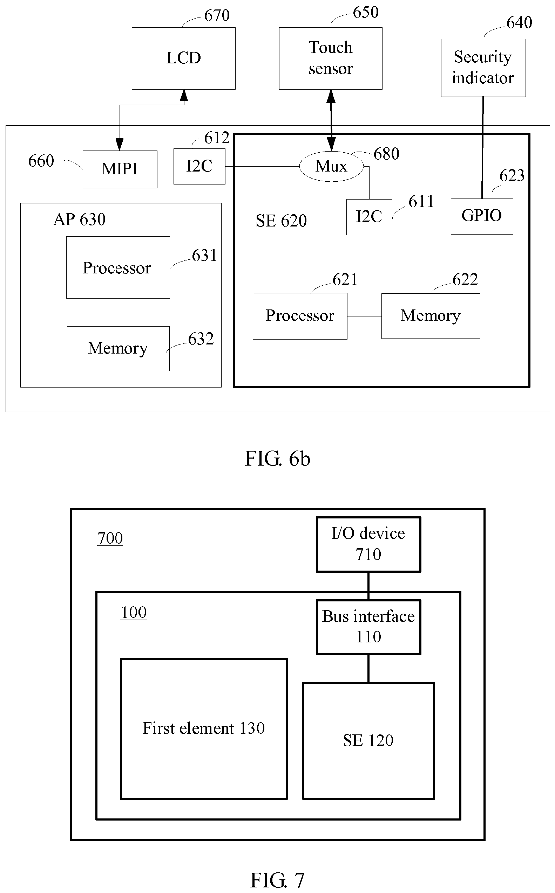

FIG. 6b is another example of a chip according to an embodiment of this application. In FIG. 6b, a multi-way switch 680 is disposed in an SE 620 and directly controlled by the SE 620. A specific working process of the chip in FIG. 6b is similar to that in FIG. 6a, and details are not described herein again.

In the SOC chip in the embodiments of this application, the SE may directly access the bus interface. Therefore, in the secure scenario, input data is obtained directly by the SE, instead of being forwarded by the first element. Therefore, the input data is not intercepted by a malicious application software, and input security can be improved.

Therefore, the SOC in the embodiments of this application can achieve SE-level security. A mobile phone or another mobile terminal open platform that uses the SOC in the embodiments of this application has a secure input capability of a POS machine. In other words, the mobile phone or another mobile terminal device may have a POS machine function.

FIG. 7 is a schematic block diagram of a terminal 700 according to an embodiment of this application. As shown in FIG. 7, the terminal 700 may include the SOC 100 in the foregoing embodiments of this application, and an I/O device 710, where the I/O device 710 may be the I/O device described in the foregoing embodiments of this application.

The terminal 700 may support mobile payment. By using the SOC in the embodiments of this application, the terminal 700 can achieve SE-level security and provide a secure input capability of a POS machine, that is, the terminal 700 may serve as a POS machine.

A person of ordinary skill in the art may understand that, the terminal 700 may also include another component not shown in FIG. 7. For example, as a mobile phone, the terminal 700 may also include components such as a radio frequency (Radio Frequency, RF) circuit. This is not limited in this application.

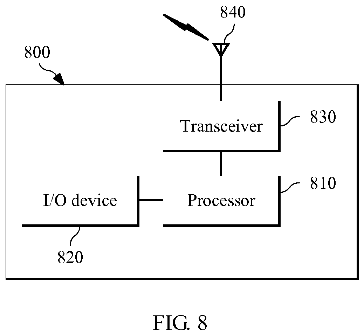

For example, FIG. 8 is a schematic structural diagram of a terminal 800 according to an embodiment of this application. As shown in FIG. 8, the terminal 800 may include a processor 810, an I/O device 820, a transceiver 830, and an antenna 840. The processor 810 may be the SOC in the foregoing embodiments of this application, and for brevity, details are not described herein again. The I/O device 820 may be the I/O device described in the foregoing embodiments of this application. The transceiver 830 communicates with another device by using the antenna 840. A person of ordinary skill in the art may understand that, a terminal structure shown in FIG. 8 does not constitute a limitation on the terminal. The terminal may include more or fewer components than those shown in the figure, or some components may be combined, or some components may be separated, or the components may be disposed in a different manner.

It should be understood that, specific examples in foregoing description are only intended to help a person skilled in the art better understand the embodiments of this application, rather than limiting the scope of the embodiments of this application.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed apparatus may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments of this application.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a portable hard disk, a read-only memory (Read-Only Memory, ROM), a random access memory (Random Access Memory, RAM), a magnetic disk, or an optical disc.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A system on chip (100), SOC, comprising a bus interface (110), a secure element (120, 320, 420, 620), SE, and a first element (130, 330, 430, 630) that are integrated in the SOC, wherein
the bus interface is configured to be connected to an input/output, I/O, device (350, 450, 650, 710) and to the SE;
the SE is configured to:
determine whether an application that currently requires the I/O device to input data is an application in the SE;
when a secure scenario is determined based on a fact that the application currently requiring input is an application in the SE, access the I/O device by using the bus interface, obtain first data input by the I/O device without sending the first data to the first element, and perform secure processing on the first data; and
when a common scenario is determined based on a fact that the application currently requiring input is not an application in the SE access the I/O device by using the bus interface, obtain the second data, and send the second data to the first element; and
the first element is configured to: in the common scenario, obtain the second data input forwarded from the SE;
wherein the first element comprises an application processor, a processor core in a trusted execution environment, TEE, a digital signal processor, or an application-specific integrated circuit.

2. The SOC according to claim 1, wherein the SE is further configured to control, in the secure scenario, the I/O device to display a data input interface.

3. The SOC according to claim 1 or 2, wherein the SE is further configured to send, to a server, data obtained after secure processing.

4. The SOC according to any one of the preceding claims, wherein the bus interface is disposed in the SE.

5. The SOC according to any one of claims 1 to 3, wherein the SE is configured to configure, in the secure scenario, an access mode of the bus interface as accessible only by the SE, and configure, in the common scenario, the access mode of the bus interface as accessible by the first element.

6. The SOC according to any one of claims 1 to 3, wherein the bus interface comprises a first bus interface (111) and a second bus interface (112); and
the SE is configured to: in the secure scenario, control the second bus interface to be connected to the I/O device, and access the I/O device by using the second bus interface; and
in a common scenario, control the first bus interface to be connected to the I/O device, so that the first element accesses the I/O device by using the first bus interface.

7. The SOC according to claim 6, wherein the SOC further comprises a multi-way switch; and
the SE is configured to: control switching of the multi-way switch in the secure scenario, so that the second bus interface is connected to the I/O device, or control switching of the multi-way switch (140) in the common scenario, so that the first bus interface is connected to the I/O device.

8. The SOC according to claim 7, wherein the multi-way switch is disposed in the SE.

9. The SOC according to any one of claims 6 to 8, wherein the second bus interface is disposed in the SE.

10. The SOC according to any one of claims 1 to 9, wherein the SE is further configured to send a security indication to a user when determining to enter the secure scenario.

11. The SOC according to any one of claims 1 to 10, wherein the I/O device comprises a data collection sensor, a touchscreen, or a display.

12. The SOC according to any one of claims 1 to 11, wherein the bus interface comprises an inter-integrated circuit bus, I2C, interface or a mobile industry processor interface, MIPI.

## Patentansprüche

1. Ein-Chip-System (100), SOC, eine Busschnittstelle (110), ein sicheres Element (120, 320, 420, 620), SE, und ein erstes Element (130, 330, 430, 630), die in das SOC integriert sind, umfassend,
wobei
die Busschnittstelle dafür konfiguriert ist, mit einem Eingabe/Ausgabegerät (350, 450, 650, 710), E/A-Gerät, und mit dem SE verbunden zu sein,
das SE für Folgendes konfiguriert ist:
Bestimmen, ob eine Anwendung, die momentan eine Dateneingabe am E/A-Gerät erfordert, eine Anwendung in dem SE ist,
wenn basierend auf der Tatsache, dass die Anwendung, die momentan eine Eingabe erfordert, eine Anwendung in dem SE ist, ein sicheres Szenario bestimmt wird, Zugreifen auf das E/A-Gerät mit Hilfe der Busschnittstelle, Erzielen einer ersten Dateneingabe durch das E/A-Gerät, ohne die ersten Daten an das erste Element zu senden, und Durchführen einer sicheren Verarbeitung der ersten Daten, und
wenn basierend auf der Tatsache, dass die Anwendung, die momentan eine Eingabe erfordert, keine Anwendung in dem SE ist, ein normales Szenario bestimmt wird, Zugreifen auf das E/A-Gerät mit Hilfe der Busschnittstelle, Erzielen der zweiten Daten und Senden der zweiten Daten an das erste Element, und
das erste Element für Folgendes konfiguriert ist: in dem normalen Szenario Erzielen der zweiten Dateneingabe, weitergeleitet von dem SE,
wobei das erste Element einen Anwendungsprozessor, einen Prozessorkern in einer vertrauenswürdigen Laufzeitumgebung, TEE - "Trusted Execution Environment", einen Digitalsignalprozessor oder eine anwendungsspezifische Schaltung umfasst.

2. SOC nach Anspruch 1, wobei das SE ferner dafür konfiguriert ist, das E/A-Gerät in dem sicheren Szenario zu steuern, eine Dateneingabeschnittstelle anzuzeigen.

3. SOC nach Anspruch 1 oder 2, wobei das SE ferner dafür konfiguriert ist, Daten an einen Server zu senden, die nach der sicheren Verarbeitung erzielt werden.

4. SOC nach einem der vorhergehenden Ansprüche, wobei die Busschnittstelle in dem SE angeordnet ist.

5. SOC nach einem der Ansprüche 1 bis 3, wobei das SE dafür konfiguriert ist, in dem sicheren Szenario einen Zugriffsmodus der Busschnittstelle derart zu konfigurieren, dass nur das SE darauf zugreifen kann, und in dem normalen Szenario den Zugriffsmodus der Busschnittstelle derart zu konfigurieren, dass das erste Element darauf zugreifen kann.

6. SOC nach einem der Ansprüche 1 bis 3, wobei die Busschnittstelle eine erste Busschnittstelle (111) und eine zweite Busschnittstelle (112) umfasst und
das SE für Folgendes konfiguriert ist: in dem sicheren Szenario die zweite Busschnittstelle zu steuern, mit dem E/A-Gerät verbunden zu sein, und mit Hilfe der zweiten Busschnittstelle auf das E/A-Gerät zuzugreifen, und
in einem normalen Szenario die erste Busschnittstelle zu steuern, mit dem E/A-Gerät verbunden zu sein, so dass das erste Element mit Hilfe der ersten Busschnittstelle auf das E/A-Gerät zugreift.

7. SOC nach Anspruch 6, wobei das SOC ferner einen Mehrfachschalter umfasst und das SE für Folgendes konfiguriert ist: Steuern des Schaltens des Mehrfachschalters in dem sicheren Szenario derart, dass die zweite Busschnittstelle mit dem E/A-Gerät verbunden ist, oder Steuern des Schaltens des Mehrfachschalters (140) in dem normalen Szenario derart, dass die erste Busschnittstelle mit dem E/A-Gerät verbunden ist.

8. SOC nach Anspruch 7, wobei der Mehrfachschalter in dem SE angeordnet ist.

9. SOC nach einem der Ansprüche 6 bis 8, wobei die zweite Busschnittstelle in dem SE angeordnet ist.

10. SOC nach einem der Ansprüche 1 bis 9, wobei das SE ferner dafür konfiguriert ist, eine Sicherheitsangabe an einen Benutzer zu senden, wenn bestimmt wird, in das sichere Szenario einzutreten.

11. SOC nach einem der Ansprüche 1 bis 10, wobei das E/A-Gerät einen Datenerfassungssensor, einen Touchscreen oder ein Display umfasst.

12. SOC nach einem der Ansprüche 1 bis 11, wobei die Busschnittstelle eine Interintergrierte-Schaltung-Bus-, I2C-, -Schnittstelle oder eine MIPI-, "Mobile Industry Processor Interface", -Schnittstelle ist.

## Revendications

1. Système sur puce (100), SOC, comprenant une interface de bus (110), un élément sécurisé (120, 320, 420, 620), SE, et un premier élément (130, 330, 430, 630) qui sont intégrés dans le SOC, dans lequel
l'interface de bus est configurée pour être connectée à un dispositif d'entrée/sortie, E/S (350, 450, 650, 710), et au SE ;
le SE est configuré pour :
déterminer si oui ou non une application qui est en cours de demande au dispositif d'E/S d'entrer des données est une application dans le SE ;
lorsqu'un scénario sécurisé est déterminé sur la base du fait que l'application en cours de demande d'entrée est une application dans le SE, accéder au dispositif d'E/S au moyen de l'interface de bus, obtenir des premières données entrées par le dispositif d'E/S sans envoyer les premières données au premier élément, et exécuter un traitement sécurisé sur les premières données ; et
lorsqu'un scénario commun est déterminé sur la base du fait que l'application en cours de demande d'entrée n'est pas une application dans le SE, accéder au dispositif d'E/S au moyen de l'interface de bus, obtenir les secondes données, et envoyer les secondes données au premier élément ; et
le premier élément est configuré pour : dans le scénario commun, obtenir les secondes données entrées transférées depuis le SE ;
dans lequel le premier élément comprend un processeur d'application, un cœur de processeur dans un environnement d'exécution de confiance, TEE, un processeur de signal numérique ou un circuit intégré spécifique à une application.

2. SOC selon la revendication 1, dans lequel le SE est en outre configuré pour commander, dans le scénario sécurisé, le dispositif d'E/S afin qu'il affiche une interface d'entrée de données.

3. SOC selon la revendication 1 ou 2, dans lequel le SE est en outre configuré pour envoyer, à un serveur, les données obtenues après le traitement sécurisé.

4. SOC selon l'une quelconque des revendications précédentes, dans lequel l'interface de bus est disposée dans le SE.

5. SOC selon l'une quelconque des revendications 1 à 3, dans lequel le SE est configuré pour configurer, dans le scénario sécurisé, un mode d'accès à l'interface de bus comme accessible uniquement par le SE, et configurer, dans le scénario commun, le mode d'accès de l'interface de bus comme accessible par le premier élément.

6. SOC selon l'une quelconque des revendications 1 à 3, dans lequel l'interface de bus comprend une première interface de bus (111) et une seconde interface de bus (112) ; et
le SE est configuré pour : dans le scénario sécurisé, commander la seconde interface de bus pour qu'elle soit connectée au dispositif d'E/S, et accéder au dispositif d'E/S au moyen de la seconde interface de bus ; et
dans un scénario commun, commander la première interface de bus pour qu'elle soit connectée au dispositif d'E/S, afin que le premier élément accède au dispositif d'E/S au moyen de la première interface de bus.

7. SOC selon la revendication 6, dans lequel le SOC comprend en outre un commutateur à voies multiples ; et
le SE est configuré pour : commander la commutation du commutateur à voies multiples dans le scénario sécurisé, afin que la seconde interface de bus soit connectée au dispositif d'E/S, ou commander la commutation du commutateur à voies multiples (140) dans le scénario commun, afin que la première interface de bus soit connectée au dispositif d'E/S.

8. SOC selon la revendication 7, dans lequel le commutateur à voies multiples est disposé dans le SE.

9. SOC selon l'une quelconque des revendications 6 à 8, dans lequel la seconde interface de bus est disposée dans le SE.

10. SOC selon l'une quelconque des revendications 1 à 9, dans lequel le SE est en outre configuré pour envoyer une indication de sécurité à un utilisateur lorsqu'il détermine d'entrer dans le scénario sécurisé.

11. SOC selon l'une quelconque des revendications 1 à 10, dans lequel le dispositif d'E/S comprend un capteur de collecte de données, un écran tactile ou un affichage.

12. SOC selon l'une quelconque des revendications 1 à 11, dans lequel l'interface de bus comprend une interface de bus de circuit inter-intégré, I2C, ou une interface de processeur de l'industrie mobile, MIPI.
